# EUROPÄISCHE PATENTSCHRIFT

(11) **EP 1 495 452 B1**
(45) Veröffentlichungstag und Bekanntmachung des Hinweises auf die Patenterteilung: **20.08.2008**
(21) Anmeldenummer: 03702472.6
(22) Anmeldetag: 20.01.2003
(51) Int. Cl.: G07F 7/08

(54) **SICHERHEITSMODUL FÜR EIN ENDGERÄT ZUM TRANSFERIEREN VON ELEKTRONISCHEN WERTEINHEITEN**
TERMINAL SECURITY MODULE FOR THE TRANSFER OF ELECTRONIC VALUE UNITS
MODULE DE SECURITE POUR APPAREIL TERMINAL DESTINE AU TRANSFERT DE VALEURS ELECTRONIQUES

(30) Priorität: 23.01.2002 DE 10202649
(43) Veröffentlichungstag der Anmeldung: 12.01.2005
(73) Patentinhaber: Giesecke & Devrient GmbH, 81677 München (DE)
(72) Erfinder: JOHNE, Andreas, 82194 Gröbenzell (DE)
(74) Vertreter: Dendorfer, Claus
(86) Internationale Anmeldenummer: PCT/EP2003/000499
(87) Internationale Veröffentlichungsnummer: WO 2003/063100

(56) Entgegenhaltungen:
- EP-A- 1 120 761
- WO-A-97/10560
- DE-A- 4 432 411
- GB-A- 2 287 565
- US-B1- 6 219 651

## Beschreibung

Die Erfindung geht aus von einem Sicherheitsmodul nach der Gattung des Hauptanspruchs. Endgeräte mit Sicherheitsmodulen dieser Art sind unter anderem in Gestalt von Terminals bekannt, die im Rahmen des "Systems Geldkarte" zur Entgegennahme von Zahlungen dienen, welche mittels einer Geldkarte ausgeführt werden. Das System Geldkarte ist unter anderem in der Konferenzdokumentation zur OMNICARD 1999,13. bis 15.01.1999 beschrieben. Es basiert auf einem tragbaren Datenträger in Gestalt einer Smartcard, der an entsprechenden Ladeterminals mit einem begrenzten Guthaben aufladbar ist. An Händlerterminals ist auf die Geldkarte aufgebrachtes Guthaben in Form von elektronischen Werteinheiten wieder entladbar.

Die Händlerterminals müssen hierfür mit einem Sicherheitsmodul in Gestalt einer Händlerkarte ausgestattet sein. Diese führt im Dialog mit der Geldkarte den jeweils beabsichtigten Werteinheitentransfer durch und erzeugt einen Transferdatensatz, der von dem Händler zu einem beliebigen Zeitpunkt an ein Hintergrundsystem transferiert werden kann, welches eine Gutschrift auf das Konto des Händlers veranlaßt. Bei der Entnahme und Weiterleitung von elektronischen Werteinheiten von einer Geldkarte führt die Händlerkarte alle sicherheitsrelevanten Funktionen aus. Dabei bildet sie unter Zugriff auf den Händler ausweisende Personalisierungsdaten ein Zertifikat, dessen Vorlage bei der Einrichtung bei einem Hintergrundsystem Voraussetzung für die Vornahme einer Gutschrift zu Gunsten des Kontos des Händlers ist. Händlerkarten werden nur von besonders berechtigten Institutionen ausgegeben, etwa von Geldinstituten oder von Betreibern von Abrechnungszentralen. Sie sind so ausgeführt, daß Manipulationen durch physische Angriffe auf ihre Struktur ausgeschlossen sind.

In Gebrauch sind zwei Ausführungen der Händlerkarte. In einer ersten Ausführung hat die Händlerkarte die Gestalt einer Minichipkarte in Normformat, in der ein Betriebssystem, die konkrete Anwendung sowie einen Händler ausweisende Personalisierungsdaten eingerichtet sind. Die Händlerkarten werden in der Regel in vorbereitete Plätze in einem Händlerterminal eingesteckt. Ihre Personalisierung und auch die Einbringung des Betriebssystems sowie der konkreten Anwendung erfolgen durch den Kartenherausgeber oder Kartenhersteller.

In der zweiten gebräuchlichen Variante ist die Händlerkarte in virtueller Form als Softwaremodul ausgeführt und in einer sicheren Umgebung innerhalb des Händlerterminals angeordnet. Das Softwaremodul emuliert dabei die Funktion eines physikalisch vorhandenen Sicherheitsmodules und speichert auch die Personalisierungsdaten. Die Personalisierung eines solchen virtuellen Sicherheitsmodules kann nachträglich, z.B. bei einem Händler erfolgen. In einer Abwandlung der zweiten Ausführungsvariante ist die Händlerkarte bei einem Server eingerichtet, auf dem auch weitere Händlerkarten für andere Terminals eingerichtet sein können. Die Terminals führen in dieser Abwandlung im wesentlichen nur den Zugriff auf die elektronischen Werteinheiten auf der eingesetzten Geldkarte durch.

Zur Gewährleistung einer größtmöglichen Sicherheit sind beide Ausführungen der Händlerkarte mit Sicherheitsauflagen versehen. Diese beeinträchtigen allerdings die Handhabung. So sind die in körperlich greifbarer Form, also etwa in Chipkartenform ausgeführten Händlerkarten mit einem Verfallsdatum versehen, zu dem sie ausgetauscht werden müssen. Der Austausch bedingt in der Regel einen Vororteinsatz eines Technikers und ist jedenfalls bei großen Terminalpopulationen zeit- und kostenintensiv.

Bei Ausführung der Händlerkarte in virtueller Form als Softwaremodul ist ein Austausch grundsätzlich auch aus der Ferne, insbesondere über ein Datennetz, möglich. Allerdings ist dabei das Umordnen einer vorhandenen Händlerkarte zu einem anderen Terminal nicht möglich. Eine solche Neuzuweisung einer Händlerkarte entspräche einer Vervielfältigung einer Händlerkarte, die aus Sicherheitsgründen nicht zugelassen werden kann.

Fällt deshalb ein Terminal etwa aufgrund eines technischen Defektes aus, muß eine neue Händlerkarte eingerichtet werden, was in der Regel wiederum zeit- und kostenaufwendig ist.

Das Dokument GB-A-2287565 offenbart ein Sicherheitsmodul zur Verwendung in einem Endgerät zum Transferieren von elektronischen Werteinheiten von einem tragbaren Datenträger auf ein in einem Hintergrundsystem geführtes Konto eines Empfängers, wobei das Endgerät eine zentrale Steuereinheit zur Vermittlung eines Datenaustausches zwischen dem tragbaren Datenträger und dem Hintergrundsystem aufweist, und wobei das Sicherheitsmodul jeden beabsichtigten Werteinheitentransfer unter Zugriff auf den Empfänger ausweisende Personalisierungsdaten in einen zertifizierten, einreichbaren Transferdatensatz überführt, wobei es aus zwei trennbaren Komponenten aufgebaut ist, wobei in der ersten Komponente die mathematischen Operationen zur Bildung eines zertifizierten Transferdatensatzes eingerichtet sind und die zweite Komponente die den Empfänger identifizierenden Personalisierungsdaten trägt.

Der Erfindung liegt nun die Aufgabe zugrunde, ein Sicherheitsmodul anzugeben, das die Handhabung damit ausgerüsteter Endgeräte erleichtert.

Diese Aufgabe wird gelöst durch ein Sicherheitsmodul mit den Merkmalen des Hauptanspruchs. Erfindungsgemäß ist das Sicherheitsmodul aus zwei Komponenten aufgebaut. Indem dabei die Personalisierungsdaten in einer physisch separat ausgebildeten Komponente untergebracht sind, können sie durch Austausch der Komponente leicht ersetzt oder in ein anderes Endgerät gebracht werden. Durch die von den Personalisierungsdaten getrennte Unterbringung der mathematischen Operationen und kryptographischen Algorithmen in einer anderen eigenständigen Komponente ergibt sich desweiteren der Vorteil, daß jene durch einfaches Nachladen über ein Datennetz jederzeit an neue Anforderungen anpaßbar sind. Dabei kann nun auch zugelassen werden, daß eine Komponente mit den mathematischen Operationen und kryptographischen Algorithmen kopiert und/ oder identisch gleichzeitig auf mehreren Endgeräten eingerichtet wird. Da die mathematischen und kryptographischen Funktionen nicht in derselben Komponente wie die Personalisierungsdaten realisiert sind, und diese auch kein umfangreiches

Betriebssystem aufweisen muß, kann sie technisch einfach und damit kostengünstiger ausgeführt sein. Die geringeren Anforderungen hinsichtlich der Leistungsfähigkeit ermöglichen zudem eine Verbesserung der physischen Manipulationssicherheit der Komponente mit den Personalisierungsdaten.

Ansprüche 1, 2, 4 offenbaren die Erfindung. Bevorzugtes Beispiel wird in Anspruch 3 offenbart.

In einer zweckmäßigen Ausgestaltung hat die Komponente mit den mathematischen Operationen und kryprographischen Algorithmen die Gestalt eines Softwaremoduls und ist in der zentralen Steuereinheit des Endgerätes realisiert. Die Komponente mit den Personalisierungsdaten ist vorzugsweise als aus dem Endgerät lösbares Modul ausgebildet und hat z.B. die Gestalt einer Chipkarte. Die Schnittstelle zwischen Personalisierungsdatenkomponente und Endgerät kann dabei mit schnittstellenspezifischen technischen Details ausgestattet sein, so daß sie ein weiteres Sicherheitsmerkmal bildet.

In vorteilhafter Weiterbildung des Sicherheitsmodules kann vorgesehen sein, daß die Komponente mit den Personalisierungsdaten Daten mehrerer Empfänger trägt und entsprechend in einer Mehrzahl von Endgeräten unterschiedlicher Empfänger einsetzbar ist.

Das Sicherheitsmodul kann desweiteren sowohl durch den Hersteller wie auch während des regelmäßigen Gebrauchs aus der Ferne mit neuen Daten versehen werden.

Unter Bezugnahme auf die Zeichnung wird nachfolgend ein Ausführungsbeispiel der Erfindung näher erläutert.

### Zeichnung:

Die Figur zeigt ein mit einem aus zwei Komponenten bestehenden Sicherheitsmodul ausgestattetes Endgerät zum Transfer von elektronischen Werteinheiten.

Die Figur veranschaulicht die Struktur eines Gesamtsystems zur Ausführung eines Transfers von elektronischen Werteinheiten. Wesentliche Elemente des Systems sind ein Endgerät 10 mit einem Sicherheitsmodul 60, ein zur Führung eines Datenaustausches mit dem Endgerät 10 geeigneter tragbarer Datenträger 30 sowie ein mit dem Endgerät über ein Datennetz 80 verbundenes Hintergrundsystem 40.

Das Endgerät 10 dient zur Ausführung des Transfers von elektronischen Werteinheiten zwischen dem tragbaren Datenträger 30 eines Nutzers und einem im Hintergrundsystem 40 geführten Konto 48 eines durch das Endgerät 10 bestimmten Empfängers unter Einschaltung des Sicherheitsmodules 60. Empfänger ist typischerweise ein Anbieter einer Ware oder einer Dienstleistung, bei dem auch das Endgerät 10 aufgestellt ist. Zweckmäßig besitzt das Endgerät 10 eine seine Bedienung unterstützende Bauform. Typischerweise hat das Endgerät 10 die Gestalt eines Terminals mit Display und Tastatur.

Wesentliche Elemente des im folgenden Terminal genannten Endgerätes 10 sind eine Bedienerschnittstelle 12, eine Datenträgerschnittstelle 14, eine zentrale Steuereinheit 16 sowie eine Aufnahmevorrichtung 22 zur Aufnahme eines Sicherheitselementes 24. Bedienerschnittstelle 12, Datenträgerschnittstelle 14, zentrale Steuereinheit 16 und Aufnahmevorrichtung 22 sind über übliche interne Datenverbindungen miteinander verbunden. Über die zentrale Steuereinheit 16 ist das Terminal 10 ferner mit dem Datennetz 80 verbunden.

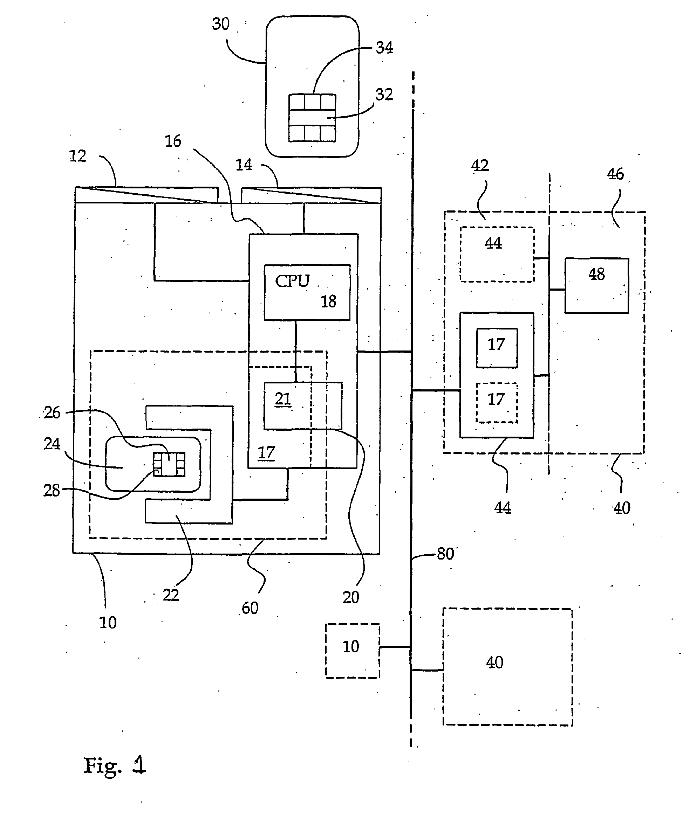

Ein weiteres Hauptelement des Terminals 10 ist das Sicherheitsmodul 60. Es besteht aus zwei Komponenten, nämlich dem Sicherheitselement 24 sowie einer in der zentralen Steuereinheit 16 realisierten Funktionalität, dem Operationsmodul 17. In der Fig. 1 ist es durch eine strichlierte Umfassung angedeutet, welche auch die Aufnahmevorrichtung 22 einschließt. Das Sicherheitsmodul 60 realisiert als Ganzes dieselbe Funktionalität wie eine in der Beschreibungseinleitung erwähnte Händlerkarte. Insbesondere führt es im Dialog mit einem tragbaren Datenträger 30 einen jeweils beabsichtigten Werteinheitentransfer durch und erzeugt einen Transferdatensatz, der von dem Empfänger zu einem beliebigen Zeitpunkt zur Gutschrift an das Hintergrundsystem 40 transferiert werden kann. Das Sicherheitsmodul 60 führt dabei alle sicherheitsrelevanten Funktionen aus. Insbesondere bildet es mittels geeigneter mathematischer Operationen und kryptographischer Algorithmen und unter Zugriff auf den Empfänger ausweisende Personalisierungsdaten ein Zertifikat, dessen Vorlage bei der Einrichtung bei einem Hintergrundsystem 40 Voraussetzung für die Vornahme einer Gutschrift zugunsten des Empfängers ist.

Die zentrale Steuereinheit 16 ist grundsätzlich wie ein üblicher Computer aufgebaut und besitzt einen Prozessor 18 zur Durchführung von Datenverarbeitungsoperationen sowie eine Speichereinrichtung 20 zur dauerhaften sowie flüchtigen Ablage von Daten. Die zentrale Steuereinheit 16 steuert sämtliche Terminalfunktionen. Insbesondere kontrolliert sie den Datenaustausch mit tragbaren Datenträgern 30 sowie zum Hintergrundsystem 40. In der Speichereinrichtung 20 liegen dauerhaft gespeichert Betriebsprogramme, welche die für das Terminal 10 eigentümlichen Funktionalitäten realisieren.

Einen Teil der zentralen Steuereinheit 16 bildet ein Operationsmodul 17, das die bei der Ausführung eines Werteinheitentransfers notwendigen, sicherheitsrelevanten Verfahrensschritte ausführt. Dieses Operationsmodul 17 ist vorzugsweise in Softwareform realisiert und beinhaltet besondere Betriebsprogramme, welche die Verfahrensabläufe zur Abwicklung eines Werteinheitentransfers zwischen einem tragbaren Datenträger 30 und dem Hintergrundsystem 40 mit dem Konto 48 eines Empfängers sowie die im Rahmen dieser Verfahrensabläufe eingesetzten kryptographischen Algorithmen und mathematischen Operationen zur Bildung von Zertifikaten umfassen. Die das Operationsmodul 17 bildenden Betriebsprogramme sind in einem sicheren Bereich 21 der Speichereinrichtung 20 abgelegt.

Zumindest der Bereich 21 der Speichereinrichtung 20, welcher die das Operationsmodul 17 bildenden Betriebsprogramme enthält, ist besonders manipulationssicher ausgebildet und befindet sich in einer entsprechend gesicherten Umgebung innerhalb des Terminals 10.

Alternativ zur Einrichtung des Operationsmodules 17 im Terminal 10 selbst kann vorgesehen sein, daß ein virtuelles Operationsmodul 17 in einem dem Terminal 10 zugeordneten Terminalserver 44 eingerichtet ist. Die zentrale Steuereinheit 16 besitzt in diesem Fall eine zur Herstellung einer sicheren Datenverbindung zu dem virtuellen Operationsmodul 17 ausgebildete Schnittstelle.

Die Aufnahmevorrichtung 22 beinhaltet Mittel zum mechanischen Fixieren eines Sicherheitselementes 24. Desweiteren beinhaltet sie Mittel zur Einrichtung einer Datenkommunikation zwischen der zentralen Steuereinheit 16 und dem Sicherheitselement 24. Vorzugsweise ist die Aufnahmevorrichtung 22 so gestaltet, daß das Sicherheitselement 24 daraus zweckmäßig ohne Einsatz besonderer Hilfsmittel lösbar ist.

Das Sicherheitselement 24 hat die Gestalt eines tragbaren Datenträgers und besitzt einen gegen Manipulation gesicherten integrierten Schaltkreis 26, in dem Personalisierungsdaten abgelegt sind, die einen Empfänger eindeutig bezeichnen. Vorgesehen sein kann, daß in dem integrierten Schaltkreis 26 Personalisierungsdaten mehrerer verschiedener Empfänger abgelegt sind. Das Sicherheitselement 24 korrespondiert zu dem Operationsmodul 17, mit dem zusammen es das Sicherheitsmodul 60 bildet. Zur Ausführung eines Werteinheitentransfers muß das Sicherheitsmodul 60 vollständig in dem Terminal 10 zur Verfügung stehen.

Um mit dem Operationsmodul 17 in Verbindung zu treten, besitzt das Sicherheitselement 24 eine dem integrierten Schaltkreis 26 zugeordnete Schnittstelle 28, über die eine Datenverbindung zu der zentralen Steuereinheit 16 herstellbar ist. In einer zweckmäßige Ausgestaltung hat das Sicherheitselement 24 die Form einer Chipkarte im Minichipkartenformat. Die Schnittstelle 28 hat in diesem Fall entsprechend die Gestalt eines Kontaktfeldes oder einer Spule. Zur Verbesserung der Systemsicherheit kann die Schnittstelle 28 proprietäre Merkmale aufweisen, welche z. B. bewirken, daß ein Sicherheitselement 24 nur in einem bestimmten Typ von Terminals so einsetzbar ist. Diese Merkmale können mechanisch-physikalischer Art sein, etwa in Form einer besonderen äußeren Kontur des Sicherheitselementes 24, und, daran angepaßt, der Aufnahmevorrichtung 22. Alternativ oder zusätzlich kann daneben auch z. B. eine besondere wechselseitige Authentifizierung zwischen Sicherheitselement 24 und Steuereinheit 16 vorgesehen sein, welche zumindest bei Einbringen eines neuen Sicherheitselements 24 in ein Terminal 10 durchgeführt werden muß.

Das Sicherheitselement 24 ist so ausgeführt, daß es durch den Benutzer eines Terminals 10 ohne Hilfsmittel ausgetauscht werden kann. Durch Einstecken seines Sicherheitsmodules 24 kann dann ein Empfänger jedes beliebige Terminal 10 zur Durchführung eines Werteinheitentransfers nutzen, das über ein entsprechendes Operationsmodul 17 sowie eine passende Aufnahmevorrichtung 22 verfügt.

Die Bedienerschnittstelle 12 hat die Gestalt einer Bedienvorrichtung, welche das Auslösen eines Transfers von elektronischen Werteinheiten gestattet. Sie verfügt hierzu zweckmäßig über Eingabemittel, z.B. in Gestalt einer Tastatur, welche einem Bediener das Eingaben von Transaktionsbefehlen ermöglichen, sowie über Ausgabemittel, vorzugsweise in Gestalt eines Displays, zur Übermittlung von Transfermeldungen an den Nutzer. Die Bedienschnittstelle 12 kann dabei auch eine externe Einheit sein, beispielsweise die Schnittstelle einer mit dem Terminal 10 verbundenen Kasse.

Über die Datenträgerschnittstelle 14 kommuniziert das Terminal 10 mit dem tragbaren Datenträger 30 eines Nutzers. Die Kommunikation kann kontaktbehaftet oder kontaktlos erfolgen. Bei Ausführung des tragbaren Datenträger 30 als Chipkarte hat die Datenträgerschnittstelle 14 die Gestalt einer üblichen Kartenlese/Schreibeinheit.

Auf dem tragbaren Datenträger 30 sind einem realen Geldwert entsprechende elektronische Werteinheiten in Form von Daten abgespeichert. Er besitzt einen gegen Manipulationen besonders gesicherten integrierten Schaltkreis 32, worin die elektronischen Werteinheiten abgelegt sind. Der integrierte Schaltkreis 32 ist mit einer Schnittstelle 34 verbunden, über welche die elektronische Werteinheiten aus dem integrierten Schaltkreis 32 entnommen oder in diesen eingebracht werden können. In einer zweckmäßigen Ausgestaltung besitzt der tragbare Datenträger 30 die Form einer Chipkarte in einem ISO-Normformat. Die Schnittstelle 34 hat in diesem Fall bei Ausführung als kontaktbehaftete Karte die Gestalt eines Kontaktfeldes, bei Ausführung als nichtkontaktierende Karte die Gestalt einer Spule.

Das Datennetz 80 ist zweckmäßig ein Vielteilnehmernetz, an das mehrere Terminals 10 parallel anschließbar sind. Es kann durch ein öffentlich zugängliches Netz, insbesondere das Internet, oder durch ein spezielles Terminalnetz, etwa ein Banknetz, gebildet sein. Das Datennetz 70 kann auch durch Verkettung mehrerer technisch unterschiedlicher Netze realisiert sein, etwa durch Verknüpfung eines Funknetzes mit einem Kabelnetz. An das Datennetz 70 können ferner mehrere Hintergrundsysteme 40 angeschlossen sein.

Das Hintergrundsystem 40 als Ganzes verwaltet die von tragbaren Datenträgern 30 entnommenen elektronischen Werteinheiten und führt die Gutschriften der den Werteinheiten entsprechenden Geldbeträge auf die Konnten 48 des jeweils bestimmten Empfängers durch. Es gliedert sich in einen Terminalserverbereich 42 und in einen Bankenbereich 46. Beide Bereiche 42, 46 sind über interne Datenverbindungen miteinander verbunden. Der Terminalserverbereich 42 umschließt einen oder mehrere Terminalserver 44, denen wiederum jeweils ein oder mehrere Terminals 10 zugeordnet sind. Die Terminalserver 44 können räumlich verteilt aufgestellt sein, etwa bei lokalen Zahlungsabwicklungszentralen. In den Terminalservern 44 können entsprechend den eingesetzten Terminals 10 ein oder mehrere, jeweils einem Terminal 10 zugeordnete, virtuelle Operationsmodule 17 zur Ausführung der sicherheitsrelevanten Verfahrensschritte bei der Durchführung von Werteinheitentransfers eingerichtet sein.

Der Bankenbereich 46 umfaßt die das Konto 48 eines jeweils begünstigten Empfängers führende Einrichtung, in der Regel eine Bank, sowie die Infrastruktur zur Bewegung von Geld auf dieses Konto 48. Das Hintergrundsystem 40 kann durch das Zusammenwirken mehrerer Einzelsysteme gebildet sein.

Nachfolgend wird die Handhabung des in der Fig. gezeigten Systems erläutert. Für die Ausführung eines Transfers von Werteinheiten präsentiert ein Nutzer den tragbarer Datenträger 30 der Datenträgerschnittstelle 14 des Terminals 10.

Dessen zentrale Steuereinheit 16 stellt darauf eine Verbindung zwischen dem integrierten Schaltkreis 32 des tragbaren Datenträgers 30, dem Operationsmodul 17 des Terminals 10 sowie dem integrierten Schaltkreis 26 des Sicherheitselementes 24 her. In einem folgenden Datenaustausch zwischen dem integrierten Schaltkreis 32 und der zentralen Steuereinheit 16 werden sodann elektronische Werteinheiten aus dem integrierten Schaltkreis 32 des tragbaren Datenträgers 30 entnommen und an Operationsmodul 17 übergeben.

Das Operationsmodul 17 liest nun die Personalisierungsdaten 28 des Empfängers aus dem integrierten Schaltkreis 26 des Sicherheitselementes 24 aus. Mit den Personalisierungsdaten bildet das Operationsmodul 17 ein den Empfänger eindeutig ausweisendes Zertifikat zu den entnommenen Werteinheiten. Dem so entstandenen Datensatz fügt es ferner terminalspezifische Daten zu. Schließlich entsteht ein zertifizierter, einreichbarer Transferdatensatz. Diesen speichert das Operationsmodul 17 in der Speichereinrichtung 21. Der Empfänger kann ihn nachfolgend jederzeit über das Hintergrundsystem 40 zur Gutschrift auf seinem Konto 48 einreichen. Nach Bildung des Transferdatensatzes schreibt das Operationsmodul 17 die Personalisierungsdaten 28 wieder in den integrierten Schaltkreis 26 des Sicherheitselementes 24 zurück.

Zur Verbesserung der Sicherheit des Systems gegen Mißbrauch ist das Sicherheitselement 24 mit einem Verfallsdatum versehen, so daß es in regelmäßigen Abständen, z.B. nach Ablauf einer definierten Anzahl von Jahren, ausgetauscht werden muß. Einen auf diese Weise fälligen Austausch kann der Halter eines Terminals 10 selbst unmittelbar vornehmen, indem er das im Terminal 10 befindliche Sicherheitselement 24 aus der Aufnahmevorrichtung 22 löst und durch ein neues Sicherheitselement 24 ersetzt. Das ablaufbedingte Ersetzen des Sicherheitselementes 24 kann auch durch Übertragen von Software über das Datennetz 80 erfolgen, wobei insbesondere ein neues Verfallsdatum eingestellt wird. Voraussetzung für einen derartigen Fernaustausch ist allerdings, daß die Datenübertragung hinreichend verschlüsselt erfolgt, so daß die Maßnahme nur von der berechtigten Instanz ausführbar ist. Weitere Voraussetzung ist, daß durch den Ablauf des Austausches sichergestellt ist, daß ein Sicherheitselement 24 zu keiner Zeit vollständig dupliziert vorliegt.

Zur Gewährleistung einer bestmöglichen Sicherheit werden weiterhin auch die im Operationsmodul 17 eingesetzten kryptographischen Algorithmen und mathematischen Operationen ständig weiterentwickelt und das Operationsmodul 17 entsprechend ebenfalls regelmäßig ausgetauscht oder durch Übernahme neuer Software auf den neuesten Stand gebracht. Ein solcher Austausch bzw. ein solches Auffrischen der in einem Operationsmodul 17 vorhandenen kryptographischen Algorithmen und mathematischen Operationen kann jederzeit über das Hintergrundsystem 40 erfolgen, indem die aktualisierte Version der kryptographischen Algorithmen bzw. mathematischen Operationen über das Datennetz 80 in die Speichereinrichtung 21 des Operationsmoduls 17 geladen wird.

In einer Weiterbildung des in Fig.1 gezeigten Systems ist vorgesehen, daß im integrierten Schaltkreis 26 eines Sicherheitselementes 24 Personalisierungsdaten verschiedener Empfänger abgelegt sind. Durch Einstecken seines Sicherheitsmodules 24 kann dann ein Empfänger jederzeit ein beliebiges Terminal 10, das über ein geeignetes Operationsmodul 17 verfügt, zur Durchführung eines Werteinheitentransfers nutzen.

Unter Beibehaltung des grundlegenden Konzeptes, das Sicherheitsmodul zweikomponentig aus einem in Softwareform ausgeführten Operationsmodul, in dem nur die mathematische Algorithmen und kryptographischen Operationen realisiert sind, sowie einem körperlich vorhandenen Sicherheitselement, in dem nur Personalisierungsdaten abgelegt sind, aufzubauen, gestattet das erfindungsgemäße System eine Reihe von Ausgestaltungen. So können besondere Maßnahmen, etwa die Verwendung besonderer kryptographischer Schlüssel, zur Sicherstellung der Zusammengehörigkeit eines Sicherheitselementes und eines Operationsmodules vorgesehen sein. Annahmevorrichtung 22 und Sicherheitselement 24 können desweiteren eine Vielzahl von möglichen Bauform besitzen. Es muß lediglich gewährleistet sein, daß die Personalisierungsdaten 28 im integrierten Schaltkreis 26 manipulationssicher untergebracht sind.

## Patentansprüche

1. Sicherheitsmodul (60) zur Verwendung in einem Endgerät (10) zum Transferieren von elektronischen Werteinheiten von einem tragbaren Datenträger auf ein in einem Hintergrundsystem geführtes Konto eines Empfängers, wobei das Endgerät eine zentrale Steuereinheit zur Vermittlung eines Datenaustausches zwischen dem tragbaren Datenträger und dem Hintergrundsystem aufweist, wobei das Sicherheitsmodul (60) jeden beabsichtigten Werteinheitentransfer unter Zugriff auf den Empfänger ausweisende Personalisierungsdaten in einen zertifizierten, einreichbaren Transferdatensatz überführt und wobei das Sicherheitsmodul (60) aus zwei trennbaren Komponenten (17,24) aufgebaut ist, **dadurch gekennzeichnet, daß** die erste Komponente (17) in Softwareform in einem besonders manipulationssicher ausgebildeten Bereich der zentralen Steuereinheit (10) realisiert ist und in der ersten Komponente (17) die mathematischen Operationen zur Bildung eines zertifizierten Transferdatensatzes eingerichtet sind und die zweite Komponente (24) als aus dem Endgerät (10) lösbares Modul ausgebildet ist, wobei diese zweite komponente (24) einen gesicherten integrirten Schattkreis besitzt, und die zweite Komponente (24) die den Empfänger identifizierenden Personalisierungsdaten trägt.

2. Sicherheitsmodul (60) zur Verwendung in einem Endgerät (10) zum Transferieren von elektronischen Werteinheiten von einem tragbaren Datenträger auf ein in einem Hintergrundsystem geführtes Konto eines Empfängers, wobei das Endgerät eine zentrale Steuereinheit zur Vermittlung eines Datenaustausches zwischen dem tragbaren Datenträger und dem Hintergrundsystem aufweist, wobei das Sicherheitsmodul (60) jeden beabsichtigten Werteinheitentransfer unter Zugriff auf den Empfänger ausweisende Personalisierungsdaten in einen zertifizierten, einreichbaren Transferdatensatz überführt und wobei das Sicherheitsmodul (60) aus zwei trennbaren Komponenten (17, 24) aufgebaut ist, **dadurch gekennzeichnet, daß** die erste Komponente (17) in einem dem Endgerät (10) zugeordneten Terminalserver (44) realisiert ist und in der ersten Komponente (17) die mathematischen Operationen zur Bildung eines zertifizierten Transferdatensatzes eingerichtet sind, und die zweite Komponente (24) als aus dem Endgerät (10) lösbares Modul ausgebildet ist, wobei diese zweite komponente (24) einen gesicherten integrirten Schattkreis besitzt, und die zweite Komponente (24) die den Empfänger identifizierenden Personalisierungsdaten trägt.

3. Sicherheitsmodul (60) nach Anspruch 1 oder 2, **dadurch gekennzeichnet, daß** die zweite Komponente (24) Personalisierungsdaten von mehreren Empfängern trägt.

4. Endgerät (10) zum Transferieren von elektronischen Werteinheiten von einem tragbaren Datenträger auf ein in einem Hintergrundsystem geführtes Konto eines Empfängers, **dadurch gekennzeichnet, daß** es mit einem Sicherheitsmodul (60) gemäß Anspruch 1 oder 2 ausgebildet ist.

## Claims

1. A security module (60) for use in a terminal (10) for transferring electronic value units from a portable data carrier to a recipient's account run on a background system, the terminal comprising a central control unit for routing a data exchange between the portable data carrier and the background system, the security module (60) converting each intended value unit transfer, with access to personalising data identifying the recipient, into a certified, submittable transfer data set and the security module (60) being constructed of two separable components (17, 24), **characterised in that** the first component (17) is embodied in software form in a particularly tamper-secure region of the central control unit (10) and the mathematical operations are set up in the first component (17) to form a certified transfer data set and the second component (24) takes the form of a module detachable from the terminal (10), this second component (24) having a secured integrated circuit, and the second component (24) carries the personalising data identifying the recipient.

2. A security module (60) for use in a terminal (10) for transferring electronic value units from a portable data carrier to a recipient's account run on a background system, the terminal comprising a central control unit for routing a data exchange between the portable data carrier and the background system, the security module (60) converting each intended value unit transfer, with access to personalising data identifying the recipient, into a certified, submittable transfer data set and the security module (60) being constructed of two separable components (17, 24), **characterised in that** the first component (17) is embodied in a terminal server (44) assigned to the terminal (10) and the mathematical operations are set up in the first component (17) to form a certified transfer data set, and the second component (24) takes the form of a module detachable from the terminal (10), this second component (24) having a secured integrated circuit, and the second component (24) carries the personalising data identifying the recipient.

3. A security module (60) according to claim 1 or claim 2, **characterised in that** the second component (24) carries personalising data of a plurality of recipients.

4. A terminal (10) for transferring electronic value units from a portable data carrier to a recipient's account run on a background system, **characterised in that** it is provided with a security module (60) according to claim 1 or claim 2.

## Revendications

1. Module de sécurité (60) destiné à l'utilisation dans un appareil terminal (10) pour le transfert d'unités de valeur électroniques à partir d'un support de données portable sur un compte géré dans un système d'arrière-plan d'un destinataire, dans lequel l'appareil terminal comprend une unité de commande centrale pour la réalisation d'un échange de données entre le support de données portable et le système d'arrière-plan, dans lequel le module de sécurité (60) convertit tout transfert prévu d'unités de valeurs, au moyen d'un accès à des données de personnalisation définissant le destinataire, en un ensemble certifié et présentable de données de transfert, et dans lequel le module de sécurité (60) est constitué de deux composants séparables (17, 24), **caractérisé en ce que** le premier composant (17) est réalisé sous la forme d'un logiciel dans une zone conçue de façon particulièrement résistante aux manipulations de l'unité de commande centrale (10) et les opérations mathématiques destinées à la formation d'un ensemble certifié de données de transfert sont installées dans le premier composant (17) et **en ce que** le deuxième composant (24) est conçu sous la forme d'un module amovible de l'appareil terminal (10), ce deuxième composant (24) comprenant un circuit de commutation intégré sécurisé, et le deuxième composant (24) contient les données de personnalisation identifiant le destinataire.

2. Module de sécurité (60) destiné à l'utilisation dans un appareil terminal (10) pour le transfert d'unités de valeur électroniques à partir d'un support de données portable sur un compte géré dans un système d'arrière-plan d'un destinataire, dans lequel l'appareil terminal comprend une unité de commande centrale pour la réalisation d'un échange de données entre le support de données portable et le système d'arrière-plan, dans lequel le module de sécurité (60) convertit tout transfert prévu d'unités de valeurs, au moyen d'un accès à des données de personnalisation définissant le destinataire, en un ensemble certifié et présentable de données de transfert, et dans lequel le module de sécurité (60) est constitué de deux composants séparables (17, 24), **caractérisé en ce que** le premier composant (17) est réalisé dans un serveur terminal (44) adjoint à l'appareil terminal (10) et les opérations mathématiques destinées à la formation d'un ensemble certifié de données de transfert sont installées dans le premier composant (17) et **en ce que** le deuxième composant (24) est conçu sous la forme d'un module amovible de l'appareil terminal (10), ce deuxième composant (24) comprenant un circuit de commutation intégré sécurisé, et le deuxième composant (24) contient les données de personnalisation identifiant le destinataire.

3. Module de sécurité (60) selon la revendication 1 ou 2, **caractérisé en ce que** le deuxième composant (24) contient les données de personnalisation de plusieurs destinataires.

4. Appareil terminal (10) pour le transfert d'unités de valeur électroniques à partir d'un support de données portable sur un compte géré dans un système d'arrière-plan d'un destinataire, **caractérisé en ce qu'**il est conçu avec un module de sécurité (60) selon la revendication 1 ou 2.
